# NEUE EUROPÄISCHE PATENTSCHRIFT

(11) **EP 1 485 980 B2**
(45) Veröffentlichungstag und Bekanntmachung des Hinweises auf die Entscheidung über den Einspruch: **20.01.2010**
(45) Hinweis auf die Patenterteilung: 30.11.2005
(21) Anmeldenummer: 03709736.7
(22) Anmeldetag: 28.02.2003
(51) Int. Cl.: H02K 15/02, H02K 1/18

(54) **DREHMOMENTMOTOR IN SEGMENTBAUWEISE**
TORQUE MOTOR HAVING A SEGMENT DESIGN
MOTEUR A CHAMP TOURNANT DE CONCEPTION SEGMENTEE

(30) Priorität: 08.03.2002 DE 10210071
(43) Veröffentlichungstag der Anmeldung: 15.12.2004
(73) Patentinhaber: INA Drives & Mechatronic GmbH & Co. OHG, 98527 Suhl (DE)
(72) Erfinder: SCHMIDT, Dirk, 98527 Suhl (DE); JHARSKIJ, Wladimir, Minsk 220141 (BY)
(74) Vertreter: Engel, Christoph Klaus
(86) Internationale Anmeldenummer: PCT/EP2003/002125
(87) Internationale Veröffentlichungsnummer: WO 2003/077404

(56) Entgegenhaltungen:
- US-A- 4 315 171
- US-A- 5 592 731
- US-B1- 6 321 439

## Beschreibung

Die vorliegende Erfindung betrifft einen Drehmomentmotor mit einem ringförmigen Rotor und einem ringförmigen Stator, der einen Statorrahmen mit Eisenkernen und darauf angeordneten elektrischen Wicklungen umfasst.

Neben herkömmlichen rotatorischen Motoren, welche Antriebsfunktionen unter Zwischenschaltung von Getriebeelementen erfüllen, werden in den verschiedensten Technikbereichen zunehmend sogenannte Direktantriebe eingesetzt, bei denen die bereitgestellten Antriebskräfte ohne Zwischenschaltung von Getriebeelementen an die zu bewegenden Bauteile geliefert werden. Zu diesen Direktantrieben werden auch sogenannte Drehmomentmotoren (auch bekannt als Torquemotoren) der oben genannten Art gerechnet.

Aus der Firmenschrift "Direct Drives & Systems" der Firma ETEL S.A., Schweiz, Version 1.1-01/07/99, ist ein Drehmomentmotor bekannt, der einen festen Statorrahmen und einen ringförmigen innerhalb des Statorrahmens laufenden Rotor besitzt. Der Rotor besteht aus einem Rotorrahmen und darauf befestigten Permanentmagneten, die eine Permanenterregung bereitstellen. Der ebenfalls ringförmig gebildete Stator besitzt einen Eisenkern und eine darauf angeordnete elektrische Wicklung. An der Außenseite des Statorrings sind Kühlelemente befestigt, die mit einer Wasserkühlung gekoppelt sind. Dieser Motor kann bei einem Durchmesser von 2,5 m Drehmomente von etwa 10.000 Nm erzeugen. Neben der Bereitstellung großer Kräfte ermöglicht ein solcher Drehmomentmotor eine präzise Positionierung, große Beschleunigungen und Geschwindigkeiten in einer großen Bandbreite. Wie bei anderen großen Elektromotoren besteht allerdings auch hier das Problem, dass sehr große und schwere Drehteile angefertigt, transportiert und zusammengebaut werden müssen, wodurch die Herstellungskosten erheblich beeinflusst werden. Da derartige Direktantriebe häufig in teuren Gesamtanlagen eingesetzt werden, ist die Zuverlässigkeit des Motors ein weiteres wichtiges Kriterium. Eine der wichtigsten Fehlerquellen wird darin gesehen, dass die elektrische Wicklung des Motors beschädigt wird und beispielsweise ein Kurzschluss zwischen einzelnen Windungen eintritt. In einem solchen Fall muss der komplette Motor ausgebaut werden, um die elektrische Wicklung auszutauschen. Üblicherweise sind die einzelnen Windungen in einer Vergussmasse aus Kunstharz, Träufellack o.ä. eingeschlossen, so dass nur ein vollständiger Ersatz der gesamten elektrischen Wicklung möglich ist. Aufgrund der Größe dieser Direktantriebe ist die Demontage aufwändig. Da der Direktantrieb wesentlicher Bestandteil komplexer Anlagen ist, kann diese Anlage bei einem solchen Fehler während der gesamten Reparaturzeit nicht verwendet werden.

Aus der US 4,315,171 ist ein Schrittmotor bekannt, bei welchem der Stator in einzelne Segmente unterteilt ist. Die Aufgabe dieses bekannten Motors besteht darin, durch Segmentierung des Stators das für die Herstellung der Eisenblechpakete benötigte Material effektiver zu nutzen, um dadurch die Herstellungskosten zu senken, ohne die Leistungsfähigkeit des Motors wesentlich zu beeinträchtigen. Zur Lösung dieser Aufgabe wird der kreisförmige Stator in mehrere Segmente unterteilt, deren Eisenkerne daraufhin nur Kreissegmente umfassen, wodurch die bei der Herstellung anfallenden Materialabfälle reduziert werden. Einzelne Segmente werden dann zu einem Stator zusammengesetzt, wobei alle Segmente in einem einzigen gemeinsamen Gehäuse angeordnet sind. Die elektrischen Wicklungen müssen für eine dauerhafte Betriebsfähigkeit des Motors im Gehäuse befestigt werden, was üblicherweise durch Vergießen der Wicklungen im Gehäuse erfolgt.

Die Aufgabe der vorliegenden Erfindung besteht somit darin, einen Drehmomentmotor bereitzustellen, der einen Austausch einzelner Abschnitte der elektrischen Wicklung ohne montagebedingte Beschädigung der elektrischen Wicklung und ohne Demontage des gesamten Stators ermöglicht und der gleichzeitig auch nach seiner ursprünglichen Herstellung, also bei wechselnden Einsatzbedingungen, an veränderte Leistungserfordernisse angepasst werden kann.

Diese Aufgabe wird durch den im beigefügten Anspruch 1 angegebenen Drehmomentmotor gelöst.

Ein wesentlicher Vorteil dieses erfindungsgemäßen Drehmomentmotors besteht darin, dass die einzelnen Statorsegmente wesentlich kleinere Abmessungen haben, als der aus den Segmenten zusammengebaute Stator. Die einzelnen Segmente lassen sich unter Einsatz üblicher Werkzeugmaschinen ohne weiteres fertigen. Ebenso bereitet der Transport des in Segmente zerlegten Motors keine Schwierigkeiten. Der Stator des Drehmomentmotors kann direkt am Einsatzort zusammengebaut werden, indem die Statorsegmente an der gewünschten Stelle im Statorrahmen befestigt werden. Weiterhin besteht ein Vorteil des Drehmomentmotors darin, dass im Falle eines Defektes in der elektrischen Wicklung nur das Statorsegment mit dem defekten Abschnitt der Wicklung ausgebaut werden muss. Der Motor bleibt im Übrigen vollständig erhalten und betriebsfähig. Wenn bei der Konstruktion entsprechender Anlagen darauf geachtet wird, dass die Statorsegmente gut zugänglich bleiben, können defekte Segmente ausgebaut werden, ohne dass der komplette Motor aus der Anlage entfernt werden muss. Außerdem kann eine Reparatur dieses Motors sehr schnell durchgeführt werden, indem lediglich ein neues Statorsegment an die Position eines defekten Segments gesetzt wird.

Schließlich bietet der erfindungsgemäße Drehmomentmotor den Vorteil, dass mit gleichartigen Statorsegmenten unterschiedliche Motoren aufgebaut werden können, deren Leistung abhängig von der Anzahl der eingesetzten Statorsegmente ist. Im Stator können unterschiedlich viele Segmente eingesetzt sein, ohne dass die Funktionsfähigkeit des Motors gestört ist. Um die volle Leistungsfähigkeit zu erzielen, wird der Statorrahmen entlang seines gesamten Umfangs mit Statorsegmenten bestückt. Wenn geringere Leistungen ausreichend sind, können zwischen einzelnen Statorsegmenten Lücken gelassen werden, natürlich unter Beachtung der erforderlichen Polzahl für einen störungsfreien Betrieb des Motors.

Generell ist der Drehmomentmotor noch be-triebsfähig, wenn nur ein einziges Statorsegment ange-ordnet ist, welches dann einen kleinen Teilabschnitt von beispielsweise 10° bis 30° im Statorrahmen einnimmt. Diese Gestaltung kann insbesondere angewendet wer-den, wenn nur geringe Drehzahlen und kleine Drehmo-mente benötigt werden aber andererseits eine hohe Präzision wünschenswert ist.

Bei einer vorteilhaften Ausführungsform des Drehmomentmotors besteht der ringförmige Rotor aus einem Rotorrahmen und daran befestigten Permanentmagneten. Dadurch wird ein Permanenterregerfeld bereitgestellt, so dass eine Stromzuführung zu Erregerwicklungen des Rotors nicht erforderlich ist. Der Drehmomentmotor benötigt durch diesen Verzicht auf elektrische Schleifkontakte nur eine geringe Wartung.

Gemäß einer weitergebildeten Ausführungsform sind die elektrischen Wicklungen von mehreren Statorsegmenten durch elektrische Verbindungselemente elektrisch gekoppelt, wobei die Verbindungselemente lösbar zwischen den Statorsegmenten verlaufen. Die Art der elektrischen Kopplung der einzelnen Wicklungen hängt von der gewählten Betriebsart ab. Beispiels- weise können mehrere Wicklungen zu Blöcken parallel geschaltet sein, die ihrerseits elektrisch in Reihe geschaltet werden. Die Verbindungselemente können z.B. durch Steck- oder Schraubverbindungen realisiert werden. Dadurch ist eine schnelle Demontage einzelner Statorsegmente möglich.

Der Statorrahmen umfasst einen unteren und einen oberen Statorring, zwischen denen die Statorsegmente positioniert sind. Zwischen dem unteren und dem oberen Statorring verlaufen senkrecht mehrere Rahmenstege, an denen die Statorsegmente befestigt sind. Die Rahmenstege definieren außerdem den Abstand zwischen dem unteren und dem oberen Statorring, so dass bei Bedarf auch sämtliche Statorsegmente entfernt werden können, um beispielsweise Wartungsarbeiten durchzuführen. Die Statorsegmente können selbsttragend aufgebaut werden und somit Rahmenfunktion mit übernehmen.

Um eine kreisrunde Ausrichtung der Statorsegmente einfach zu ermöglichen, besitzen die Rahmenstege winklig zueinander stehende Seitenflächen, die somit auf unterschiedlichen Radialebenen des Stators liegen. Dabei können auch unterschiedlich dick ausgebildete Rahmenstege eingesetzt werden, wodurch es möglich wird, die exakte Position der Statorsegmente zu variieren. Dadurch können beispielsweise die im Motorbetrieb auftretenden Rastkräfte optimal eingestellt werden.

Bei einer bevorzugten Ausführungsform des Drehmomentmotors sind in jedem Statorsegment drei Spulen auf Eisenkernen angeordnet, die jeweils mit den zugeordneten Spulen der benachbarten Statorsegmente gekoppelt sind. Dadurch wird der Drehmomentmotor als 3-Phasen-AC-Synchronmotor (Drei-Phasen-Wechselstrommotor) ausgebildet. Generell kommen für die Steuerung des Drehmomentmotors die allgemein für Direktantriebe bekannten Steuerverfahren und Regeleinrichtungen zum Einsatz.

Um hohe Feldstärken durch die elektrischen Wicklungen zu erzeugen, ohne eine Beschädigung der einzelnen Spulendrähte bzw. der jeweiligen Isolierung hervorzurufen, ist es nützlich, wenn an jedem Statorsegment ein Kühlkörper befestigt ist, der einen Strömungskanal zur Durchleitung eines Kühlmediums besitzt. Die Kühlung kann im einfachsten Fall durch eine sich ausbildende Luftströmung erfolgen. Bei höheren Anforderungen wird ein flüssiges Kühlmedium durch abgedichtete Strömungskanäle geleitet. In diesem Fall sind die Strömungskanäle benachbarter Statorsegmente durch lösbare Kanalverbinder miteinander in Reihe geschaltet, um weiterhin den schnellen Ausbau einzelner Statorsegmente zu ermöglichen. Im Bedarfsfall werden die Kanalverbinder und die elektrischen Verbindungselemente gelöst, um ein Statorsegment zu entfernen. Wenn der Motorbetrieb ohne dieses Statorsegment fortgesetzt werden soll, werden überbrückungselemente eingesetzt, um die elektrische Kopplung und die Weiterleitung des Kühlmediums zwischen den nunmehr über eine Lücke benachbarten Statorsegmenten zu ermöglichen.

Spezielle Ausführungsformen des Drehmomentmotors besitzen weiterhin Temperatursensoren in jedem Statorsegment und ein integriertes Messsystem, mit welchem die relative und/oder absolute Stellung zwischen Rotor und Stator erfasst werden kann. Die gelieferten Messwerte werden von der Motorsteuerung ausgewertet, wobei herkömmliche Verfahren einsetzbar sind.

Weitere Vorteile, Einzelheiten und Weiterbildungen ergeben sich aus der nachfolgenden Beschreibung bevorzugter Ausführungsformen der Erfindung, unter Bezugnahme auf die Zeichnung. Es zeigen:
- Fig. 1: eine vereinfachten Seitenansicht eines erfindungsgemäßen Drehmomentmotors;
- Fig. 2: eine Detailzeichnung eines Statorsegments in einer geschnittenen Ansicht von oben;
- Fig. 3: eine seitliche Schnittansicht des Drehmomentmotors;
- Fig. 4: eine Draufsicht auf den zusammengebauten Drehmomentmotor.

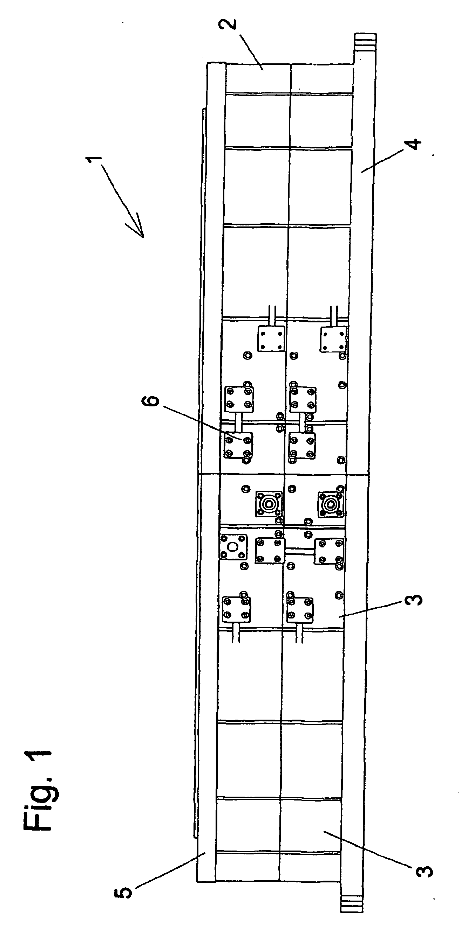

Fig. 1 zeigt eine Seitenansicht eines erfindungsgemäßen Drehmomentmotors 1. Bei der dargestellten Ausführungsform handelt es sich um einen Synchronmotor mit einem außenliegenden ringförmigen Stator 2. Der Stator 2 ist aus mehreren Statorsegmenten 3 zusammengesetzt, von denen zur Vereinfachung nur die mittleren drei Statorsegmente detaillierter gezeichnet sind. Bei der dargestellten Ausführungsform sind die Statorsegmente 3 aneinandergereiht und am gesamten Umfang des Stators angeordnet. Bei einer abgewandelten Ausführungsform könnten beispielsweise jedes zweite Statorsegment weggelassen oder auch noch weniger Statorsegmente benutzt werden.

Den unteren Abschluss des Stators bildet ein unterer Statorring 4, auf welchem die einzelnen Statorsegmente 3 aufgesetzt sind. Die Statorsegmente sind an ihrer Oberseite von einem oberen Statorring 5 abgedeckt. Bei der in Fig. 1 dargestellten Ausführungsform dienen die Statorringe 4, 5 der Halterung der Statorsegmente und der Erhöhung der Stabilität des gesamten Stators.

Die einzelnen Statorsegmente 3 sind untereinander durch elektrische Verbindungselemente (nicht gezeigt) und durch lösbare Kanalverbinder 6 verbunden, deren Funktion weiter unten beschrieben wird.

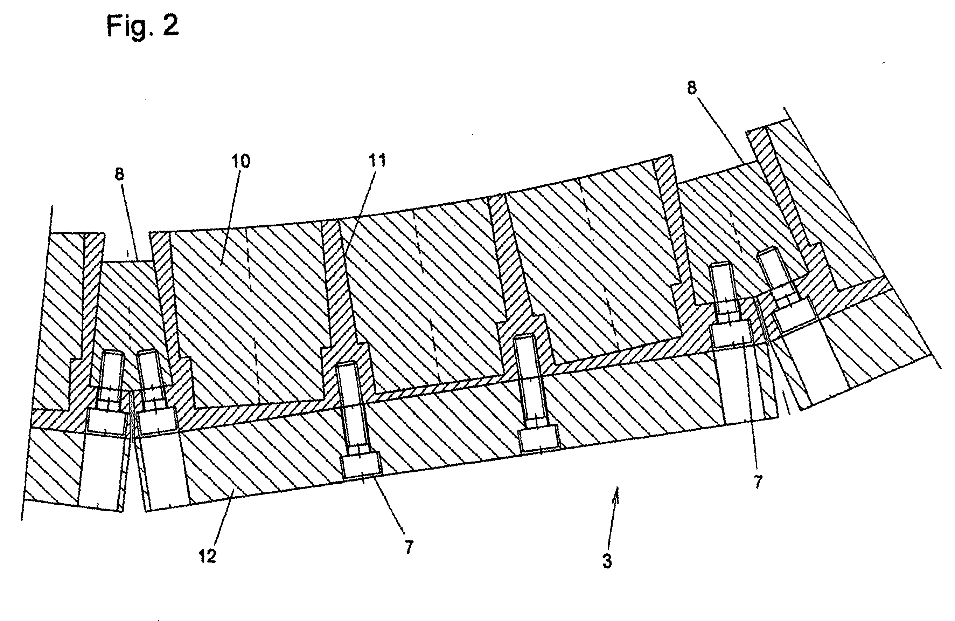

Die in Fig. 2 dargestellte Detailzeichnung zeigt in einer geschnittenen Ansicht von oben ein einzelnes Statorsegment 3, welches im Stator befestigt ist. Bei der dargestellten Ausführungsform erfolgt die Befestigung des Statorsegments 3 mit Hilfe von Gewindeschrauben 7 an zwei seitlichen Rahmenstegen 8, welche sich zwischen dem unteren Statorring 4 und dem oberen Statorring 5 lotrecht erstrecken. Bei abgewandelten Ausführungsformen könnten die Statorsegmente beispielsweise auch über Klemm- oder Rastverbindungen im Stator befestigt sein.

Aus der Fig. 2 ist weiterhin erkennbar, dass die Rahmenstege 8 spitzwinklig zueinander verlaufende Seitenflächen besitzen, die jeweils auf Radialebenen des Stators liegen. Dadurch ist die exakte Winkelpositionierung der Statorsegmente möglich, um den kreisförmigen Querschnitt des Stators 2 herzustellen. Außerdem ist erkennbar, dass unterschiedlich dicke Rahmenstege 8 eingesetzt werden können, um den Abstand zwischen den benachbarten Statorsegmenten 3 verändern zu können. Durch die geeignete Auswahl der Rahmenstege mit der passenden Dicke können die Statorsegmente so innerhalb des Statorrahmens angeordnet werden, wie es für die optimale Lage der sich im Betrieb ausbildenden magnetischen Pole gewünscht ist.

Im Inneren des Statorsegments 3 befinden sich Eisenkerne 10 und elektrische Wicklungen 11. Bei der dargestellten Ausführungsform sind in jedem Statorsegment durch die elektrischen Wicklungen drei Spulen gebildet, so dass der Drehmomentmotor mit drei Stromphasen angesteuert wird. Die elektrischen Wicklungen 11 können innerhalb des Statorsegments 3 in herkömmlicher Weise mit Kunstharzmasse, Vergusslack o.ä. vergossen bzw. gekapselt sein. Das Gehäuse des Statorsegments 3 kann beispielsweise aus Aluminium gefertigt werden.

Weiterhin ist an der Außenseite des Statorsegments 3 ein Kühlkörper 12 befestigt, der der verbesserten Wärmeabfuhr von den elektrischen Wicklungen 11 dient. Der Kühlkörper 12 ist beispielsweise wiederum mit Gewindeschrauben 7 am Statorsegment 3 befestigt. Innerhalb des Kühlkörpers 12 verläuft ein Strömungskanal, in welchem ein Kühlmedium strömt. Die in Fig. 1 erkennbaren Kanalverbinder 6 dienen der Kopplung der jeweiligen Strömungskanäle der benachbarten Statorsegmente und müssen beim Ausbau eines Statorsegments zeitweise entfernt werden.

Um das in Fig. 2 gezeigte Statorsegment aus dem Statorrahmen zu entfernen, was beispielsweise im Falle eines Defektes der elektrischen Wicklung innerhalb dieses Statorsegments erforderlich sein kann, müssen nur die Gewindeschrauben 7 gelöst werden, die das Statorsegment 3 an den Rahmenstegen 8 befestigen. Ebenfalls müssen die Kanalverbinder 6 und die elektrischen Verbindungselemente zu den benachbarten Statorsegmenten entfernt werden. Anschließend kann das Statorsegment ohne weiteres aus dem Motor heraus genommen werden, um durch ein funktionsfähiges Statorsegment ersetzt zu werden.

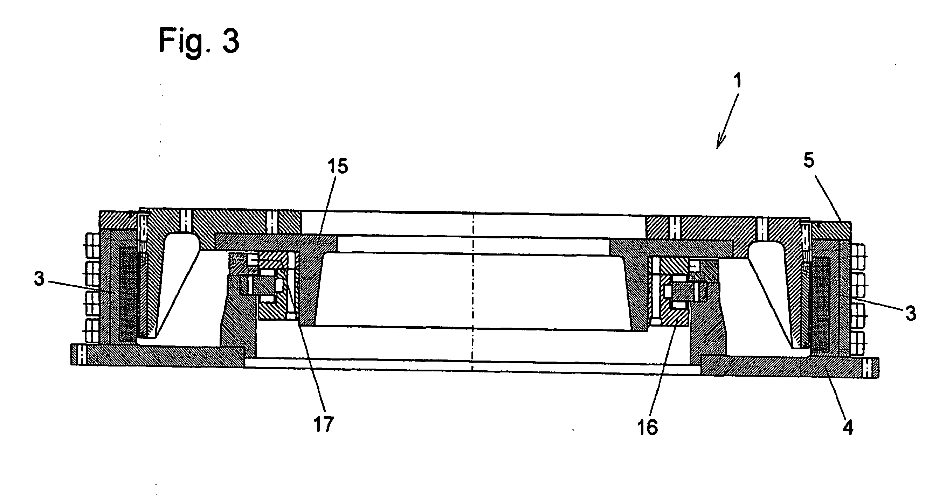

Fig. 3 zeigt eine seitliche Schnittansicht des Drehmomentmotors 1. Im außenliegenden Stator 2 sind mehrere Statorsegmente 3 angeordnet. Weiterhin besitzt der Drehmomentmotor einen ringförmigen Rotor 15, der in herkömmlicher Weise als permanenterregter Innenläufer ausgebildet sein kann. Die Kopplung zwischen Stator und Rotor erfolgt in dem dargestellten Beispiel durch ein Lager 16, welches an den speziellen Einsatzzweck des Motors angepasst ist. Außerdem kann ein Messsystem 17 vorgesehen sein, um Positionswerte zu liefern.

Der untere und der obere Statorring 4, 5 können aus mehreren Ringsegmenten zusammengesetzt sein, wenn dies bei größeren Ausführungsformen eine leichtere Fertigung ermöglicht.

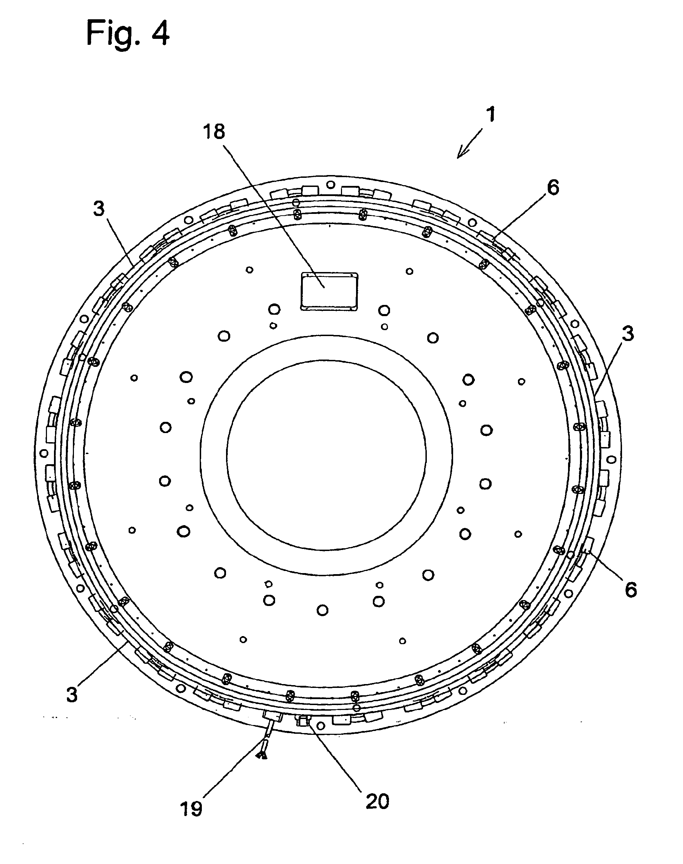

Fig. 4 zeigt den zusammengebauten Drehmomentmotor in einer Ansicht von oben. Mehrere lösbare Kanalverbinder 6 verbinden die Kühlsysteme der jeweils benachbarten Statorsegmente 3. Für gegebenenfalls erforderliche Wartungsarbeiten ist in einer Motorabdeckung eine Serviceöffnung 18 vorgesehen. Über ein elektrisches Anschlusselement 19 erfolgt die Zuführung des Motorstroms sowie der Abgriff der vom Messsystem 17 gelieferten Messdaten. Ebenso können an dieser Stelle Daten von Temperatursensoren (nicht gezeigt) ausgelesen werden, die in jedem einzelnen Statorsegment vorgesehen sind, um die Betriebstemperatur der elektrischen Wicklung zu überwachen. Das durch die Kühlkörper 12 der Statorsegmente 3 geführte Kühlmedium wird über Zu- und Abflussanschlüsse 20 geführt.

Der erfindungsgemäße Drehmomentmotor kann in unterschiedlichen Größen und mit verschiedenen Leistungswerten aufgebaut werden. Durch die weitgehend beliebige Bestückung des Motors mit mehr oder weniger Statorsegmenten kann die Motorleistung an den gewünschten Einsatzzweck ohne weiteres angepasst werden. Bereits in eine Anlage integrierte Drehmomentmotoren können bei gewachsenem Leistungsbedarf gegebenenfalls durch zusätzliche Statorsegmente verstärkt werden, wenn entsprechende Einbauplätze für zusätzliche Statorsegmente bereits bei der ursprünglichen Konzeption vorgesehen wurden. Weitere Abwandlungen zur konstruktiven Anpassung an beliebige Einsatzfälle sind denkbar.

### Bezugszeichenliste

- 1: Drehmomentmotor
- 2: Stator
- 3: Statorsegment
- 4: unterer Statorring
- 5: oberer Statorring
- 6: lösbare Kanalverbinder
- 7: Gewindeschrauben
- 8: Rahmenstege
- 10: Eisenkern
- 11: elektrische Wicklung
- 12: Kühlkörper
- 15: Rotor
- 16: Lager
- 17: Messsystem
- 18: Serviceöffnung
- 19: elektrisches Anschlusselement
- 20: Zu- und Abflussanschluss

## Patentansprüche

1. Drehmomentmotor (1) mit einem ringförmigen Rotor (15) und einem ringförmigen Stator (2), der einen Statorrahmen mit Eisenkernen und darauf angeordneten elektrischen Wicklungen umfasst, wobei die Eisenkerne (10) und die elektrischen Wicklungen (11) in mehreren Statorsegmenten (3) angeordnet sind, und wobei jedes dieser Statorsegmente (3) :
• eigenständig betriebsfähig aufgebaut ist;
• ein eigenes Gehäuse umfasst, in welchem ein segmenteigener Eisenkern (10) und eine segmenteigene elektrische Wicklung (11) angeordnet sind;
• einen vorgegebenen Winkelabschnitt ≤ 180° im Statorrahmen einnimmt;
• lösbar so mit diesem Statorrahmen verbunden ist, dass es unabhängig von den weiteren Statorsegmenten sowie ohne Beschädigung seiner elektrischen Wicklung (11) und des Statorrahmens ein- und ausgebaut werden kann,
**dadurch gekennzeichnet, dass** der Statorrahmen einen unteren (4) und einen oberen Statorring (5) umfasst, zwischen denen die Statorsegmente (3) positioniert sind, und dass zwischen dem unteren (4) und dem oberen Statorring (5) mehrere Rahmenstege (8) im wesentlichen lotrecht zu den Statorringen (4, 5) verlaufen, und der Befestigung der Statorsegmente (3) dienen, wobei die Seitenflächen der Rahmenstege (8) winklig zueinander auf unterschiedlichen Radialebenen des Stators (2) liegen.

2. Drehmomentmotor nach Anspruch 1, **dadurch gekennzeichnet, dass** eine Vielzahl von Statorsegmenten (3) angeordnet sind, die jeweils einen Winkelabschnitt ≤ 45° im Statorrahmen einnehmen.

3. Drehmomentmotor nach Anspruch 1 oder 2, **dadurch gekennzeichnet, dass** der Rotor (15) aus einem ringförmigen Rotorrahmen und daran befestigten Permanentmagneten besteht.

4. Drehmomentmotor nach einem der Ansprüche 1 bis 3, **dadurch gekennzeichnet, dass** die elektrischen Wicklungen (11) von mehreren Statorsegmenten (3) durch elektrische Verbindungselemente elektrisch miteinander gekoppelt sind, die lösbar zwischen den Statorsegmenten (3) verlaufen.

5. Drehmomentmotor nach Anspruch 4, **dadurch gekennzeichnet, dass** unterschiedlich dicke Rahmenstege (8) zwischen gleichartigen Statorsegmenten (3) eingesetzt sind, wodurch der Abstand zwischen benachbarten Statorsegmenten (3) einstellbar ist.

6. Drehmomentmotor nach einem der Ansprüche 1 bis 5, **dadurch gekennzeichnet, dass** mehrere gleichartige Statorsegmente (3) einen geschlossenen ringförmigen Stator (2) bilden.

7. Drehmomentmotor nach einem der Ansprüche 1 bis 6, **dadurch gekennzeichnet, dass** er als 3-Phasen-AC-Synchronmotor ausgebildet ist, wobei die elektrischen Wicklungen (11) in jedem Statorsegment (3) drei Spulen bilden, die mit den zugehörigen Spulen anderer Statorsegmente (3) gekoppelt sind.

8. Drehmomentmotor nach einem der Ansprüche 1 bis 7, **dadurch gekennzeichnet, dass** an jedem Statorsegment (3) ein Kühlkörper (12) befestigt ist, der mindestens einen Strömungskanal besitzt, welcher von einem Kühlmedium durchströmt wird.

9. Drehmomentmotor nach Anspruch 8, **dadurch gekennzeichnet, dass** die Strömungskanäle benachbarter Statorsegmente (3) durch lösbare Kanalverbinder (6) miteinander in Reihe geschaltet sind.

10. Drehmomentmotor nach einem der Ansprüche 1 bis 9, **dadurch gekennzeichnet, dass** in jedem Statorsegment (3) ein Temperatursensor angeordnet ist, welcher die Temperatur der elektrischen Wicklung (11) in diesem Statorsegment überwacht.

11. Drehmomentmotor nach einem der Ansprüche 1 bis 10, **dadurch gekennzeichnet, dass** der Stator (2) als äußerer Ring den Rotor (15) umgreift, dass zwischen Stator (2) und Rotor (15) ein Lager (16) angeordnet ist und dass ein Messsystem (17) integriert ist, welches die relative Position zwischen Rotor und Stator erfasst.

## Claims

1. A torque motor (1) with an annular rotor (15) and an annular stator (2) that comprises a stator frame with iron cores and electric windings arranged therein, wherein the iron cores (10) and the electric windings (11) are arranged in several stator segments (3), and wherein each of these stator segments (3)
• is designed such that it can operate independently;
• is provided with its own housing, in which a separate
• iron core (10) of the segment and a separate electric winding (11) of the segment are arranged;
• extends over a predetermined angular segment ≤ 180° in the stator frame, and
• is detachably connected to this stator frame in such a way that it can be installed and removed independently of the other stator segments without damaging its electric windings (11) and the stator frame,
**characterized in that** the stator frame comprises a lower (4) and an upper stator ring (5), wherein the stator segments (3) are positioned between said stator rings, and that several frame links (8) extend between the lower (4) and the upper stator ring (5) essentially perpendicular to the stator rings (4, 5) and serve for fixing the stator segments (3), wherein the lateral faces of the frame links (8) lie angular to one another in different radial planes of the stator (2).

2. The torque motor according to Claim 1, **characterized in that** it comprises a plurality of stator segments (3) that respectively extend over an angular segment ≤ 45° in the stator frame.

3. The torque motor according to Claim 1 or 2, **characterized in that** the rotor (15) consists of an annular rotor frame and permanent magnets fixed thereon.

4. The torque motor according to one of Claims 1-3, **characterized in that** the electric windings (11) of several stator segments (3) are electrically coupled to one another by means of detachable electric connecting elements that extend between the stator segments (3).

5. The torque motor according to Claim 4, **characterised in that** frame links (8) of different thicknesses are arranged between identical stator segments (3) in order to adjust the spacing between adjacent stator segments (3).

6. The torque motor according to one of Claims 1-5, **characterized in that** several identical stator segments (3) form a closed annular stator (2).

7. The torque motor according to one of Claims 1-6, **characterized in that** it is realized in the form of a 3-phase synchronous a.c. motor, wherein the electric windings (11) in each stator segment (3) form three coils that are coupled to the corresponding coils of other stator segments (3).

8. The torque motor according to one of Claims 1-7, **characterized in that** a cooling element (12) is mounted on each stator segment (3) and contains at least one channel, through which a cooling medium flows.

9. The torque motor according to Claim 8, **characterized in that** the channels of adjacent stator segments (3) are connected in series by means of detachable channel connectors (6).

10. The torque motor according to one of Claims 1-9, **characterized in that** each stator segment (3) is provided with a temperature sensor for monitoring the temperature of the electric winding (11) in the respective stator segment.

11. The torque motor according to one of Claims 1-10, **characterized in that** the stator (2) encompasses the rotor (15) in the form of an outer ring, **in that** a bearing (16) is arranged between the stator (2) and the rotor (15), and **in that** an integrated measuring system (17) determines the relative position between the rotor and the stator.

## Revendications

1. Moteur couple (1) avec un rotor annulaire (15) et un stator annulaire (2) comprenant un cadre de stator avec des noyaux en fer et des bobinages électriques disposés sur ceux-ci, les noyaux en fer (10) et les bobinages électriques (11) étant disposés dans plusieurs segments de stator (3), et chacun de ces segments de stator (3) :
- étant monté de façon à pouvoir fonctionner de manière autonome,
- comprenant un boîtier propre dans lequel sont disposés un noyau en fer (10) propre à chaque segment et un bobinage électrique (11) propre à chaque segment,
- occupant une partie angulaire prédéterminée ≤ 180° dans le cadre du stator, et
- étant relié de manière amovible à ce cadre de stator de telle sorte qu'il puisse être monté et démonté indépendamment des autres segments de stator et sans endommager son bobinage électrique (11) et le cadre de stator, **caractérisé par le fait que** le cadre de stator comprend un anneau de stator inférieur (4) et un anneau de stator supérieur (5) entre lesquels sont positionnées les segments de stator (3), et que, entre l'anneau de stator inférieur (4) et l'anneau de stator supérieur (5), sont disposées plusieurs armatures de cadre (8) essentiellement positionnées verticalement par apport aux anneaux de stator (4, 5) et servant à fixer les segments de stator (3), les surfaces latérales des armatures de cadre (8) étant positionnées angulairement entre elles, sur différentes plans radiaux du stator (2).

2. Moteur couple selon la revendication 1, **caractérisé par le fait qu'**il est prévu un nombre élevé de segments de stator (3) présentant chacun une partie angulaire ≤ 45° dans le cadre de stator.

3. Moteur couple selon la revendication 1 ou 2, **caractérisé par le fait que** le rotor (15) est composé d'un cadre de rotor annulaire sur lequel sont fixés des aimants permanents.

4. Moteur couple selon l'une des revendications 1 à 3, **caractérisé par le fait que** les bobinages électriques (11) de plusieurs segments de stator (3) sont couplés électriquement entre eux par des éléments de liaison électriques disposés de manière amovible entre les segments de stator (3).

5. Moteur couple selon la revendication 4, **caractérisé par le fait que** des armatures de cadre (8) de différentes épaisseurs sont installées entre des segments de stator (3) similaires, permettant ainsi de régler la distance entre des segments de stator (3) adjacents.

6. Moteur couple selon l'une des revendications 1 à 5, **caractérisé par le fait que** plusieurs segments de stator (3) similaires forment un stator annulaire (2) fermé.

7. Moteur couple selon l'une des revendications 1 à 6, **caractérisé par le fait qu'**il est configuré sous la forme d'un moteur synchrone à courant alternatif triphasé, les bobinages électriques (11) formant, dans chaque segment de stator (3), trois bobines qui sont accouplées aux bobines appartenant à d'autres segments de stator (3).

8. Moteur couple selon l'une des revendications 1 à 7, **caractérisé par le fait que** sur chaque segment de stator (3), est fixé un corps de refroidissement (12) comportant au moins un canal d'écoulement traversé par un agent de refroidissement.

9. Moteur couple selon la revendication 8, **caractérisé par le fait que** les canaux d'écoulement des segments de stator (3) adjacents, sont connectés en sérine par des connecteurs de canaux (6) amovibles.

10. Moteur couple selon l'une des revendications 1 à 9, **caractérisé par le fait que** dans chaque segment de stator (3) est disposé un capteur de temperature qui surveille la température du bobinage électriques (11) dans ce segment de stator.

11. Moteur couple selon l'une des revendications 1 à 10, **caractérisé par le fait que** le stator (2) enveloppe le rotor (15) sous forme d'anneau extérieur, un palier (16) étant disposé entre le stator (2) et, le rotor (15), et un système de mesure (17) qui détermine la position relative entre le rotor et le stator, étant intégré.
